# EUROPEAN PATENT APPLICATION

(11) **EP 4 773 063 A1**
(43) Date of publication of application: **08.07.2026**
(21) Application number: 25768045.4
(22) Date of filing: 29.01.2025
(51) Int. Cl.: G06Q 30/018, G06Q 50/06

(54) **INFORMATION PROCESSING SYSTEM AND INFORMATION PROCESSING METHOD**

(30) Priority: 06.03.2024 JP 2024033553
(71) Applicant: Fuji Electric Co., Ltd., Kawasaki-shi, Kanagawa 210-9530 (JP)
(72) Inventor: KATOH, Taisuke, Kawasaki-shi, Kanagawa 210-9530 (JP); TAKAHASHI, Hiroshi, Kawasaki-shi, Kanagawa 210-9530 (JP)
(74) Representative: Appelt, Christian W.
(86) International application number: PCT/JP2025/002803
(87) International publication number: WO 2025/187262

(57) **Abstract**

A reduction contribution amount of carbon dioxide gas by replacement of a base system with a target system in a drive system including a drive device is obtained as a more practical value. The sensor 123 actually measures a first power consumption amount consumed by the drive device in the target system. The first conversion unit 201 converts the first power consumption amount and acquires a first emission amount of the carbon dioxide gas emitted in power generation of a power amount corresponding to the first power consumption amount. The acquisition unit 202 acquires a second power consumption amount to be consumed corresponding to a control pattern of the base system by using a power consumption model that derives power consumption based on a control pattern of the drive device. The second conversion unit 203 converts the second power consumption amount to acquire a second emission amount of the carbon dioxide gas to be emitted in power generation of a power amount corresponding to the second power consumption amount. The calculation unit 204 calculates a difference between the first emission amount and the second emission amount as a reduction contribution amount.

## Description

### Technical Field

The present invention relates to an information processing technique.

### Background Art

Various techniques for contributing to reduction of carbon dioxide emitted by energy consumption have been proposed (refer to, for example, Patent Literatures 1 to 3).

### Citation List

### Patent Literature

Patent Literature 1: JP 5408077 B2
Patent Literature 2: JP 2009-217450 A
Patent Literature 3: JP 7348421 B2

### Non Patent Literature

Non Patent Literature 1: LCA Society of Japan, "Guidelines for Calculating Greenhouse Gas Emission Reduction Contribution Amount", LCA Society of Japan, second edition, March 8, 2022

### Summary of Invention

### Technical Problem

Reduction of an emission amount of greenhouse gas is widely demanded. The emission amount of greenhouse gas emitted by generation of energy consumed by a drive device is reduced, for example, by changing a production process or a conveyance process of an article. A reduction amount by implementation of such a method is referred to as a reduction contribution amount (Avoided Emissions). For example, the reduction contribution amount is widely used as an index for appealing an achievement of an approach to environmental problems, and is desired to be obtained as a more practical value.

In recent years, in Japan, methods of formulating a greenhouse gas emission amount have been developed in the chemical industry and the electrical and electronic industry. However, these methods are specialized in a specific industry, and are not related to calculation of a greenhouse gas emission reduction contribution amount of the entire industry.

In the LCA Society of Japan and World Business Council for Sustainable Development (WBCSD), participating companies are taking the lead in organizing the way of thinking regarding the greenhouse gas emission reduction contribution amount of the entire industry. In addition, the LCA Society of Japan and the WBCSD have studied a form that should be a method of evaluating the greenhouse gas emission reduction contribution amount, and have published a summary thereof. For example, the Japan LCA Society has published "Guidelines for Calculating Greenhouse Gas Emission Reduction Contribution Amount, second edition, March 8, 2022" (refer to Non-Patent Literature 1).

The above guidelines are summarized with respect to the evaluation of greenhouse gas emission amount. Here, it is described that a reduction contribution amount can be calculated by multiplying the following three items as the calculation of the reduction contribution amount.

1. Net greenhouse gas emission reduction amount compared to baseline by life cycle evaluation per functional unit, such as final product exhibiting reduction effect
2. Penetration amount of final product or the like exhibiting reduction effect
3. Contribution rate of product or the like to be evaluated

In addition, the baseline setting is described as follows in principle regarding the following baseline setting.

"A product or the like that would have become widespread if there were no product or the like to be evaluated (a target device) is defined as a product or the like to be compared (a base device). When the product or the like to be evaluated (the target device) is a final product or the like exhibiting a reduction effect, the product or the like to be compared (the base device) is defined as a baseline. The baseline needs to have the same function as the final product or the like exhibiting the reduction effect."

However, the content of the above guidelines merely serves as a guide in defining a greenhouse gas emission reduction contribution amount. Therefore, there is no description about a method of calculating the greenhouse gas emission amount in an operation process according to characteristics of the target device and a method of calculating the greenhouse gas emission amount generated when the base device having the same function as the target device and serving as a comparison target is operated for the same purpose as the target device. For this reason, there is a demand for a method of calculating a greenhouse gas emission amount and a mechanism of evaluation based on an appropriate reduction contribution amount for operating industrial facilities that implement production and conveyance of articles.

Examples of the industrial facilities that implement production and conveyance of articles include a drive system. The drive system includes a motor, an inverter, and the like each serving as an energy-consuming drive device, or a machine tool, a conveyor, a conveyance robot, an automated guided vehicle (AGV), and the like each serving as a machine facility including the motor and the inverter.

In order to reduce energy consumed in the production and conveyance of articles, it is important to optimize the energy consumption of a drive device by optimally controlling the operation of the drive device.

### Solution to Problem

An information processing system as one of the embodiments provides a reduction contribution amount in reduction of an emission amount of carbon dioxide gas by replacement of a base system with a target system in a drive system including a drive device. The information processing system includes a sensor, a first conversion unit, an acquisition unit, a second conversion unit, and a calculation unit. The sensor measures a first power consumption amount, which is a power amount consumed by the drive device in the target system. The first conversion unit converts the first power consumption amount actually measured by the sensor and acquires a first emission amount, which is an emission amount of the carbon dioxide gas emitted in power generation of a power amount corresponding to the first power consumption amount. The acquisition unit acquires a second power consumption amount, which is a power amount to be consumed corresponding to a control pattern of the base system, by using a power consumption model that derives power consumption based on a control pattern of the drive device. The second conversion unit converts the second power consumption amount, and acquires a second emission amount which is an emission amount of the carbon dioxide gas to be emitted in power generation of a power amount corresponding to the second power consumption amount. The calculation unit calculates a difference between the first emission amount and the second emission amount as a reduction contribution amount.

### Advantageous Effects of Invention

According to the above aspect, it is possible to obtain a reduction contribution amount as a more practical value.

### Brief Description of Drawings

Fig. 1 is a diagram illustrating an outline of an embodiment of the present invention.
Fig. 2 is a diagram illustrating a detailed configuration example of an information processing system that implements the present invention.
Fig. 3 is a diagram illustrating a data structure example of each piece of registration data in a database.
Fig. 4 is a diagram illustrating a hardware configuration example of an information processing device.
Fig. 5 is a flowchart illustrating processing contents of an example of authentication processing.
Fig. 6 is a flowchart illustrating processing contents of an example of reduction contribution amount calculation processing.
Fig. 7 is a flowchart illustrating processing contents of an example of base system emission amount calculation processing.
Fig. 8 is a flowchart illustrating processing contents of an example of target system emission amount calculation processing.

### Description of Embodiments

Hereinafter, an embodiment of an article production system as an example of an embodiment of a drive system will be described in detail with reference to the drawings.

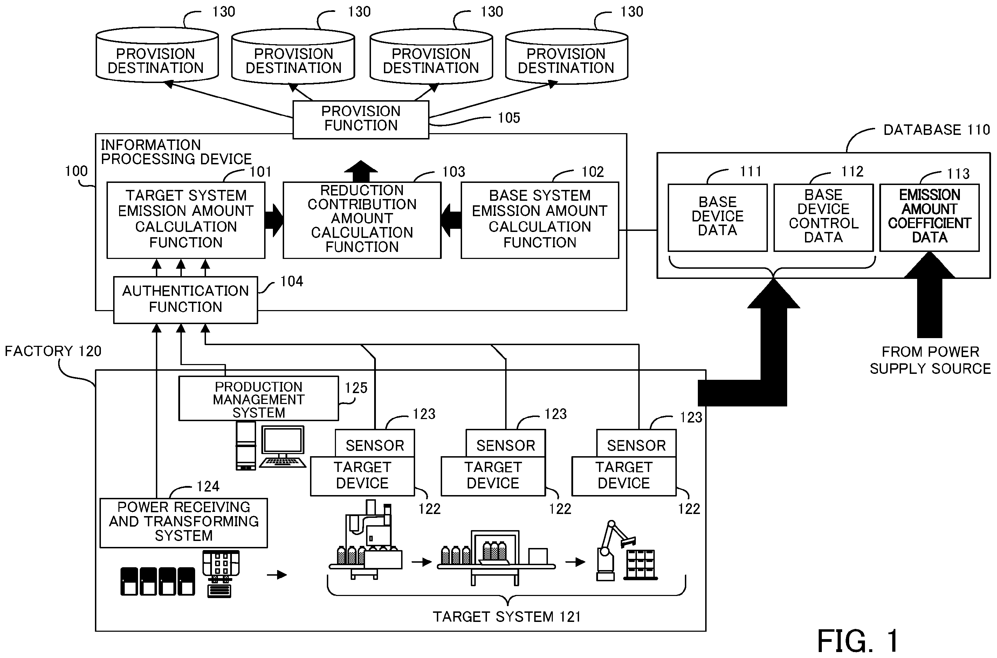

Fig. 1 is a diagram illustrating an outline of an embodiment of the present invention.

As illustrated in Fig. 1, an information processing device 100 is connected to a database 110. The information processing device 100 calculates a reduction contribution amount in reduction of an emission amount of carbon dioxide gas by update of a drive system including a drive device as a production system of an article in a factory 120, and provides the reduction contribution amount to a provision destination 130.

In the factory 120, the article is produced by a production system (a target system 121) after the update. The target system 121 includes a plurality of target devices 122 as a plurality of drive devices. Note that, although the target system 121 includes three target devices 122 in Fig. 1, this configuration is merely an example, and the number of target devices 122 included in the target system 121 may be freely selected.

A sensor 123 is installed in each target device 122. The sensor 123 actually measures the power amount (power consumption amount) consumed by the target device 122 forming the target system 121 in production of the article.

A power receiving and transforming system 124 receives and transforms power for operating the factory 120 and supplies the power to the target system 121. In the present embodiment, the power for operating the factory 120 is supplied from a plurality of supply sources, and a ratio of supply power for each supply source to supplied power is changed in real time. The power receiving and transforming system 124 calculates the ratio from the supply power for each supply source with respect to the supplied power, and has data (ratio data to be described later) indicating the ratio of the supply power for each supply source.

A production management system (PMS) 125 is a system that manages a production plan of the article in the factory 120, and includes information with regard to a production amount of the article and information (configuration information) on devices forming the target system 121.

The database 110 includes base device data 111, base device control data 112, and emission amount coefficient data 113.

The base device data 111 is data of a control state during operation and power consumption in a load for each of devices (base devices) forming a production system (base system) before update in which an article has been produced.

The base device control data 112 is data such as information with regard to a production amount of an article, information with regard to each device forming the base system, control information with regard to each device, and information with regard to each power supply source at the time of producing the article by the base system.

The emission amount coefficient data 113 is data indicating an emission amount coefficient of carbon dioxide gas for each power supply source. The emission amount coefficient of the carbon dioxide gas is a value of an emission amount of the carbon dioxide gas emitted in power generation of a unit power amount in a power supply source that operates the factory 120. In the present embodiment, the value of this emission amount coefficient is provided in real time from each power supply source.

The information processing device 100 provides a target system emission amount calculation function 101, a base system emission amount calculation function 102, a reduction contribution amount calculation function 103, an authentication function 104, and a provision function 105.

The target system emission amount calculation function 101 is a function of calculating the emission amount of the carbon dioxide gas emitted by the production of the article by the target system 121. For this calculation, a total power consumption amount of the target system 121, which is actually measured by a plurality of sensors 123, the above-described data of the ratio of the supply power for each supply source, which is acquired from the power receiving and transforming system 124, and the emission amount coefficient data 113 acquired from the database 110 are used.

The base system emission amount calculation function 102 is a function of calculating an emission amount of the carbon dioxide gas discharged by the production of the article by the base system. In this calculation, the base device data 111, the base device control data 112, and the emission amount coefficient data 113, which are acquired from the database 110, are used.

The reduction contribution amount calculation function 103 is a function of calculating a reduction contribution amount in reduction of the emission amount of carbon dioxide gas by replacement of the base system with the target system 121 in the drive system including the drive device as the production system of the article in the factory 120. With this function, a difference between an emission amount calculated by the target system emission amount calculation function 101 and an emission amount calculated by the base system emission amount calculation function 102 is calculated as the reduction contribution amount.

The authentication function 104 is a function of authenticating that each of the target devices 122 forming the target system 121 in the factory 120 matches information with regard to a component device of the target system 121 managed by the production management system 125. This authentication is performed to confirm that there is no spoofing of the component device of the target system 121 or falsification of data in calculating the reduction contribution amount, and is performed at the time of a first operation when the target system 121 is installed in the factory 120.

The provision function 105 is a function of providing the reduction contribution amount calculated by the reduction contribution amount calculation function 103 to the provision destination 130. Note that, although Fig. 1 illustrates a state in which the reduction contribution amount is provided to four provision destinations 130, this configuration is merely an example, and the number of the provision destinations 130 to which the reduction contribution amount is provided may be freely selected.

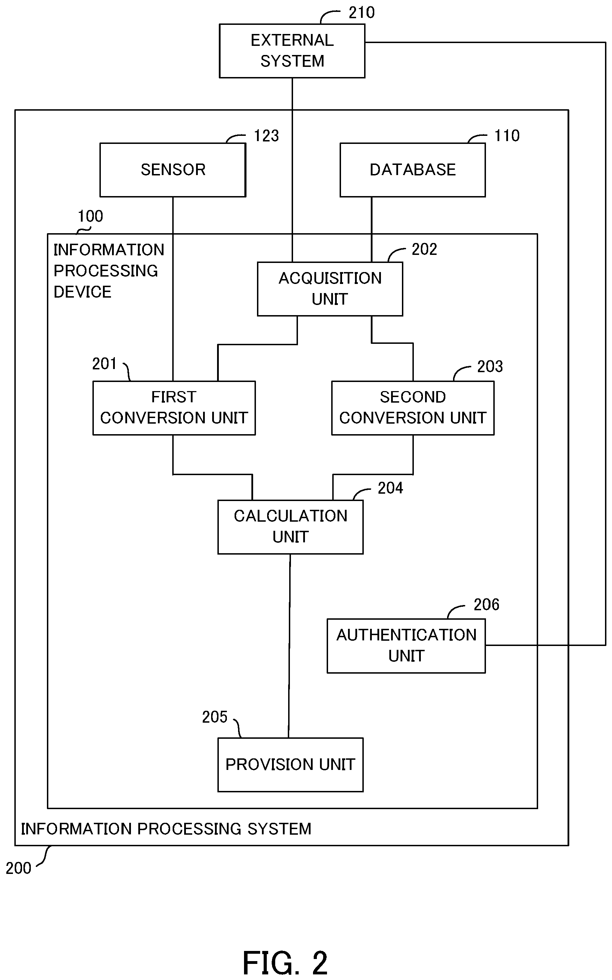

Next, Fig. 2 will be described. Fig. 2 illustrates a detailed configuration example of an information processing system 200 that implements the present invention.

The information processing system 200 provides a reduction contribution amount in reduction of the emission amount of carbon dioxide gas by replacement of the base system with the target system 121 in the drive system including the drive device as the production system of the article. The information processing system 200 includes the information processing device 100, the database 110, and the sensor 123 in Fig. 1.

The sensor 123 in Fig. 2 collectively represents the plurality of sensors 123 in Fig. 1, and measures a first power consumption amount which is a power amount consumed by the target system 121 including a plurality of target devices 122 in production of the article.

The information processing device 100 includes a first conversion unit 201, an acquisition unit 202, a second conversion unit 203, a calculation unit 204, a provision unit 205, and an authentication unit 206.

The first conversion unit 201 converts the first power consumption amount actually measured by the sensor 123 and acquires a first emission amount, which is an emission amount of the carbon dioxide gas emitted in power generation of a power amount corresponding to the first power consumption amount.

In addition, the actual measurement of the first power consumption amount may not be performed by directly measuring the power consumption amount of the target system 121 such as the sensor 123. For example, a power consumption amount calculated by a software sensor that estimates a power consumption amount of the target system 121 from a power consumption amount of a related device and a power consumption amount measured by another related sensor may also be treated as an actually measured first power consumption amount.

The acquisition unit 202 acquires a second power consumption amount, which is a power amount to be consumed by the base system in production of the article.

In the present embodiment, it is assumed that power consumption data and device control data are registered in the database 110. The power consumption data is data indicating the power consumption of each of the plurality of base devices used in the base system for each control content for each of the plurality of base devices. In addition, the device control data is data indicating control contents performed for each of the plurality of base devices for production of the article by the base system. The acquisition unit 202 acquires the power consumption data and the device control data from the database 110, and calculates and acquires the second power consumption amount using these pieces of data.

Note that the acquisition unit 202 may acquire a power amount to be consumed in accordance with a control pattern of the base system as the second power consumption amount using a power consumption model that derives power consumption based on control patterns of the plurality of target devices 122 forming the target system 121.

That is, for example, as the power consumption model of the base system, the environment of the base system may be constructed on a virtual space by a digital twin method, and the second power consumption amount may be calculated from this model and acquired by the acquisition unit 202. At this time, the base power consumption model includes the database 110 that registers therein power consumption data indicating the power consumption of each of the plurality of base devices used in the base system for each control content with respect to each of the plurality of base devices and device control data indicating a control content performed for each of the plurality of base devices by operating the base system.

In addition, for example, the power consumption model of the base system may be created by performing a simulation using an operation pattern of the target system 121 when the first power consumption amount is obtained, and the acquisition unit 202 may acquire the second power consumption amount from this model. At this time, the base power consumption model includes the database 110 that registers therein power consumption data indicating the power consumption of each of the plurality of base devices used in the base system for each control content with respect to each of the plurality of base devices and device control data indicating a control content performed for each of the plurality of base devices by operating the base system.

The second conversion unit 203 converts the second power consumption amount acquired by the acquisition unit 202 and acquires a second emission amount, which is an emission amount of the carbon dioxide gas to be emitted in power generation of a power amount corresponding to the second power consumption amount.

In the configuration example of Fig. 2, the acquisition unit 202 acquires the ratio data and the emission amount coefficient data 113 from an external system 210. The ratio data is data indicating a ratio of the supply power for each supply source to the power supplied from the plurality of supply sources to an installation place (factory 120) of the target system 121. In addition, as described above, the emission amount coefficient data 113 is data indicating the emission amount coefficient of the carbon dioxide gas for each supply source. In the present embodiment, the acquisition unit 202 acquires the ratio data from the power receiving and transforming system 124 of the factory 120 and acquires the emission amount coefficient data 113 from a power generation system of the power supply source via the database 110. That is, the power receiving and transforming system 124 and the power generation system of the power supply source are examples of the external system 210.

The first conversion unit 201 and the second conversion unit 203 convert the power consumption amount using the ratio data acquired by the acquisition unit 202 and the emission amount coefficient data 113. That is, the first conversion unit 201 acquires the first emission amount by converting the first power consumption amount actually measured by the sensor 123 using the ratio data and the emission amount coefficient data 113. In addition, the second conversion unit 203 converts the second power consumption amount acquired by the acquisition unit 202 using the ratio data and the emission amount coefficient data 113, thereby acquiring the second emission amount.

The calculation unit 204 calculates a difference between the first emission amount acquired by the first conversion unit 201 and the second emission amount acquired by the second conversion unit 203 as a reduction contribution amount.

The provision unit 205 provides the reduction contribution amount calculated by the calculation unit 204.

Since the information processing system 200 having such a configuration calculates the reduction contribution amount of the carbon dioxide gas by using an actual measurement value of the power amount consumed by the target system 121 in production of the article, it is possible to obtain the reduction contribution amount as a practical value.

The authentication unit 206 authenticates that a plurality of devices actually forming the target system 121 match the configuration information acquired from the external system 210. Note that the configuration information is information for specifying the devices forming the target system 121. In the present embodiment, the authentication unit 206 acquires the configuration information from the production management system 125. That is, the production management system 125 is also an example of the external system 210.

The information processing system 200 illustrated in Fig. 2 includes the above components. Among the functions provided by the information processing device 100, the target system emission amount calculation function 101 is provided by the first conversion unit 201, the base system emission amount calculation function 102 is provided by the second conversion unit 203, and the reduction contribution amount calculation function 103 is provided by the calculation unit 204. In addition, the authentication function 104 is provided by the authentication unit 206, and the provision function 105 is provided by the provision unit 205.

Note that the first conversion unit 201 may acquire the first emission amount by converting the power consumption amount per unit production amount of the article calculated from the first power consumption amount based on the production amount of the article by the target system 121. In addition, the second conversion unit 203 may acquire the second emission amount by converting the power consumption amount per unit production amount of the article calculated from the second power consumption amount based on the production amount of the article by the base system. At this time, the calculation unit 204 calculates a difference between the first emission amount acquired by the first conversion unit 201 and the second emission amount acquired by the second conversion unit 203 as a reduction contribution amount per unit production amount of the article.

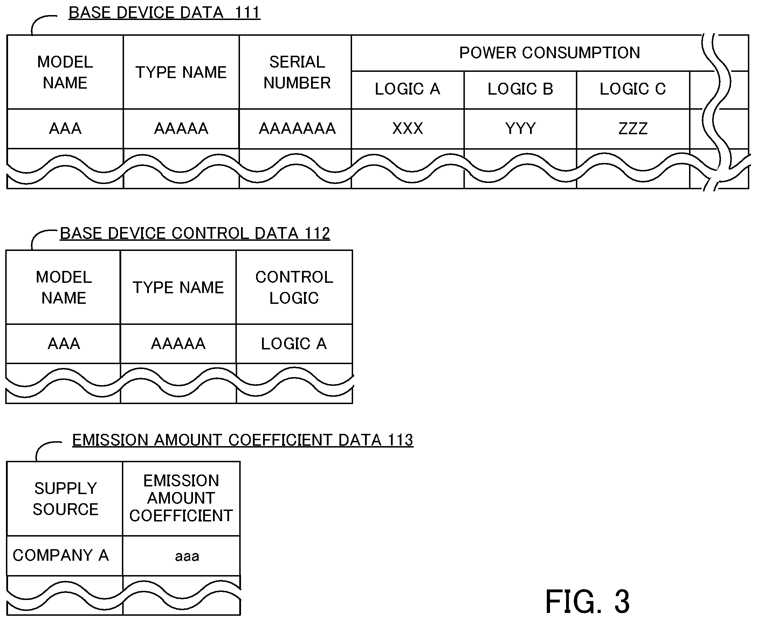

Next, a data structure example of each piece of registration data in the database 110 will be described with reference to Fig. 3.

As described above, the base device data 111, the base device control data 112, and the emission amount coefficient data 113 are registered in the database 110.

The base device data 111 is an example of the power consumption data and is data obtained by associating a model name, a type name, and a serial number of the base device with the power consumption amount for each base device forming the base system. For the power consumption amount, a value for each control logic indicating control contents (for example, an operation mode of the device) for the base device is registered.

The base device control data 112 is an example of the device control data and is data obtained by associating a model name and a type name of the base device with a control logic for each base device forming the base system. Note that information for identifying control contents to be applied to each base device at the time of producing an article by the base system is registered in the control logic. By associating the base device control data 112 and the base device data 111 with information with regard to the model name and the type name and information with regard to the control logic, the power consumption amount of each base device at the time of producing an article by the base system can be obtained.

The emission amount coefficient data 113 is data obtained by associating the name of a supply source that supplies power to the factory 120 with the emission amount coefficient in the supply source.

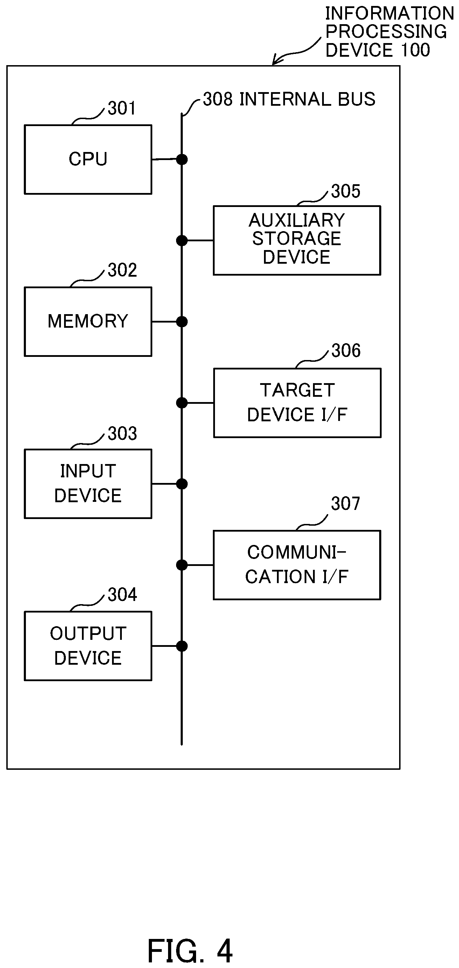

Next, a hardware configuration example of the information processing device 100 will be described with reference to Fig. 4.

The information processing device 100 includes components such as a CPU 301, a memory 302, an input device 303, an output device 304, an auxiliary storage device 305, a target device I/F 306, and a communication I/F 307. These components are all connected to an internal bus 308 and are configured such that data can be exchanged between the components. "CPU" is an abbreviation for Central Processing Unit. "I/F" is an abbreviation for Interface.

The CPU 301 controls each hardware component of the information processing device 100 by executing a predetermined program using the memory 302, for example, and enables provision of each function of the information processing device 100.

The memory 302 is, for example, a semiconductor memory, and includes a RAM area and a ROM area. "RAM" is an abbreviation for Random Access Memory. "ROM" is an abbreviation for Read Only Memory.

The input device 303 is, for example, a keyboard, a pointing device, or the like for inputting an instruction.

The output device 304 is, for example, a display device used for outputting various types of information.

The auxiliary storage device 305 is a nonvolatile storage device, and is, for example, a flash memory.

The target device I/F 306 transmits and receives various types of data to and from the target device 122 in accordance with an instruction transmitted from the CPU 301. The data received by the target device I/F 306 from the target device 122 also includes data of the power consumption amount of the target device 122, which is actually measured by the sensor 123.

In accordance with an instruction sent from the CPU 301, the communication I/F 307 transmits and receives various types of data to and from the database 110, the power receiving and transforming system 124, the production management system 125, the provision destination 130, and the like via a communication network (not illustrated).

The information processing device 100 has the above-described hardware configuration.

Next, various types of processing performed by the information processing device 100 will be described. Such various types of processing are implemented by the CPU 301 executing a predetermined program.

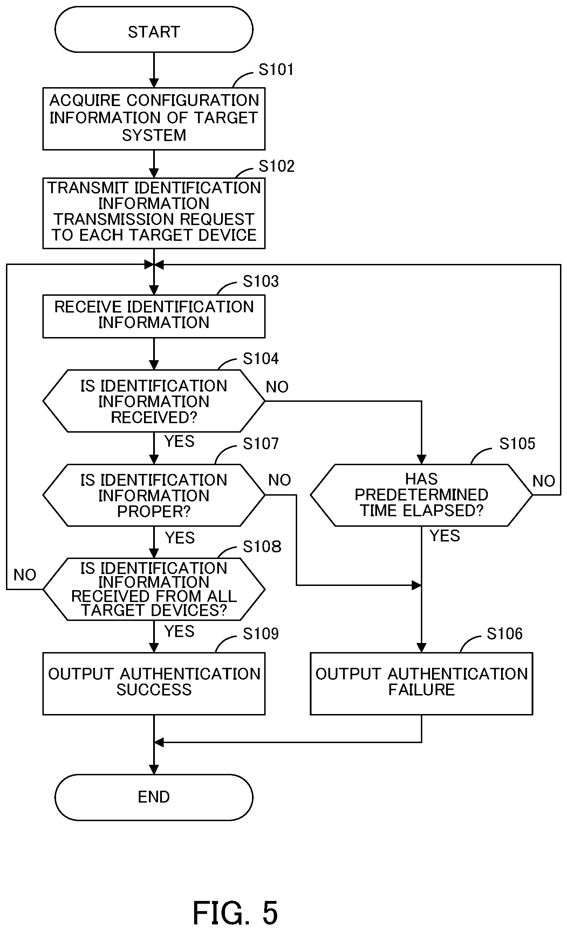

First, authentication processing will be described. Fig. 5 is a flowchart illustrating processing contents of an example of the authentication processing.

The authentication processing is processing of authenticating that a plurality of devices actually forming the target system 121 match the configuration information acquired from the external system 210, and is processing for providing a function as the authentication unit 206.

When the processing in Fig. 5 is started, first, in S101, processing of acquiring configuration information with regard to the target system 121 from the production management system 125 is performed.

Next, in S102, processing of transmitting an identification information transmission request addressed to each of the target devices 122 forming the target system 121 installed in the factory 120 is performed.

When receiving this identification information transmission request, the target device 122 has a function of returning identification information including information with regard to its own model name, type name, and serial number to a transmission source of the request.

Next, in S103, processing of receiving the identification information transmitted from the target device 122 is performed, and in subsequent S104, processing of determining whether the identification information has been received is performed. In this determination processing, when it is determined that the identification information has been received (when the determination result is YES), the processing proceeds to S107.

On the other hand, when it is determined in the determination processing in S104 that the identification information has not been received (when the determination result is NO), the processing proceeds to S105, and processing of determining whether a predetermined time has elapsed in a state in which the identification information has not been received is performed.

In the processing in S105, a timer (not illustrated) starts clocking when the determination processing in S104 is NO for the first time, and the determination result transitions from NO to YES when the timer clocks a predetermined time. In addition, in a case in which the determination processing in S104 is YES after the start of clocking by the timer, the clocking by the timer is stopped and reset.

When it is determined in the determination processing in S105 that the predetermined time has elapsed (when the determination result is YES), the processing proceeds to S106, and processing of outputting information indicating authentication failure by the output device 304 is performed. Thereafter, the authentication processing ends.

In step S107, processing of determining whether the received identification information is proper is performed. In this processing, the information with regard to the model name, the type name, and the serial number included in the identification information is compared with the information with regard to the device included in the configuration information acquired from the production management system 125 by the processing in S101. As a result of the comparison, in a case in which both match each other, it is determined that the identification information is proper, and in a case in which both do not match each other, it is determined that the identification information is improper.

When it is determined in the determination processing in S107 that the identification information is proper (when the determination result is YES), the processing proceeds to S108. On the other hand, in the determination processing in S107, when the identification information is determined to be improper (when the determination result is NO), the processing proceeds to S106, and processing of outputting information indicating authentication failure by the output device 304 is performed, and thereafter, the authentication processing ends.

In S108, processing of determining whether the identification information has been received from all of the devices indicated by the configuration information with regard to the target system 121 is performed. When it is determined in the determination processing in S108 that the identification information has been received from all of the devices (when the determination result is YES), the processing proceeds to S109. On the other hand, when it is determined in the determination processing in S108 that there remains a device from which the identification information has not been received (when the determination result is NO), the processing returns to S103 and the above-described processing is performed again.

In the determination processing in S108, when information with regard to a device that has not been compared with the identification information received in the processing in S103 remains in the configuration information acquired from the production management system 125, the determination result is NO.

In S109, processing of outputting information indicating successful authentication by the output device 304 is performed. Thereafter, the authentication processing ends.

The above processing is the authentication processing illustrated in Fig. 5.

In the processing in S106, the information with regard to the device determined to be improper in the determination processing in S107 and the information with regard to the device not compared with the identification information received in the processing in S103 may be output together with the information indicating the authentication failure or as the information indicating the authentication failure.

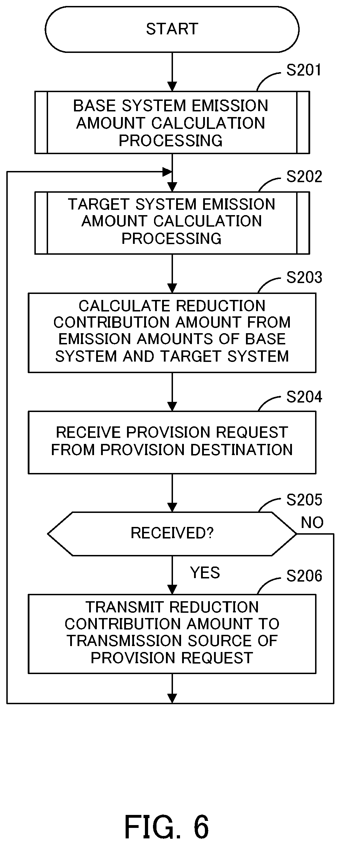

Next, reduction contribution amount calculation processing will be described. Fig. 6 is a flowchart illustrating processing contents of an example of the reduction contribution amount calculation processing.

The reduction contribution amount calculation processing is processing of calculating and providing a reduction contribution amount in reduction of an emission amount of carbon dioxide gas by replacement of a base system with the target system 121 in a drive system including a drive device as a production system of an article.

When the processing in Fig. 6 is started, first, base system emission amount calculation processing is performed in S201. This processing is processing of calculating an emission amount of carbon dioxide gas discharged by production of the article by the base system. Details of this processing will be described later.

Next, in S202, target system emission amount calculation processing is performed. This processing is processing of calculating an emission amount of carbon dioxide gas emitted by production of the article by the target system 121. Details of this processing will also be described later.

In S203, processing of calculating the reduction contribution amount from the emission amount of the carbon dioxide gas for the base system, calculated by the processing in S201, and the emission amount of the carbon dioxide gas for the target system 121, calculated by the processing in S202, is performed. In this processing, the reduction contribution amount is calculated by subtracting the emission amount (the second emission amount) of the carbon dioxide gas for the base system from the emission amount (the first emission amount) of the carbon dioxide gas for the target system 121. This processing is processing for providing a function as the calculation unit 204.

In S204, processing of receiving a provision request representing a request for providing the calculated reduction contribution amount is performed, and in subsequent S205, processing of determining whether the provision request has been received is performed. The provision request is a request transmitted from the provision destination 130.

When it is determined in the determination processing in S205 that the provision request has been received (when the determination result is YES), the processing proceeds to S206, and processing of transmitting the reduction contribution amount calculated by the processing in S203 to the provision destination 130 serving as a transmission source of the received provision request is performed. The processing in S206 is processing for providing a function as the provision unit 205.

After the processing in S206, the processing returns to S202, and the processing after the target system emission amount calculation processing is repeated.

On the other hand, when it is determined in the determination processing in S205 that the provision request has not been received (when the determination result is NO), the processing in S206 is skipped and the processing returns to S202.

The above processing is the reduction contribution amount calculation processing illustrated in Fig. 6.

Note that, in the processing of Fig. 6, the reduction contribution amount is transmitted to the provision destination 130 serving as the transmission source and is provided in response to the reception of the provision request, but the calculated reduction contribution amount may be provided to the provision destination 130 every time the reduction contribution amount is newly calculated (regardless of whether the provision request is received).

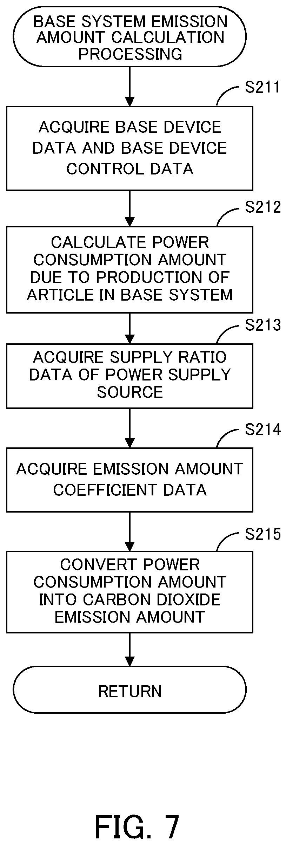

Next, details of the base system emission amount calculation processing, which is the processing in S201 in the reduction contribution amount calculation processing in Fig. 6, will be described. Fig. 7 is a flowchart illustrating processing contents of an example of the base system emission amount calculation processing.

When the processing in Fig. 7 is started, first, in S211, processing of acquiring the base device data 111 and the base device control data 112 from the database 110 is performed. Next, in S212, processing of calculating the power amount consumed by the base system by production of the article in the base system (second power consumption amount) is performed using the data acquired by the processing in S211.

In the processing in S212, first, for each base device indicated in the base device control data 112, a power consumption amount when the base device is operated by a control logic applied at the time of producing the article in the base system is acquired from the base device data 111. Then, the obtained power consumption amounts of the respective base devices are summed, and the summed value is set as a calculation result of the second power consumption amount.

Next, in S213, processing of acquiring the ratio data described above, that is, the data indicating the ratio of the power supply source from the power receiving and transforming system 124 is performed, and in the subsequent S214, processing of acquiring the emission amount coefficient data 113 from the database 110 is performed.

The above processing from S211 to S214 is processing for providing a function as the acquisition unit 202.

Next, in S215, processing of converting the second power consumption amount calculated by the processing in S212 into the carbon dioxide emission amount is performed using the ratio data and the emission amount coefficient data 113 acquired by the processing in S212 and the processing in S213. This processing is processing for providing a function as the second conversion unit 203.

In the processing in S215, first, for each power supply source indicated in the emission amount coefficient data 113, the emission amount coefficient for the supply source is multiplied by the ratio of the power supply source indicated by the ratio data. Then, the emission amount coefficient in the factory 120, that is, the carbon dioxide emission amount per unit power consumption amount is calculated by summing the values obtained for the respective power supply sources. The emission amount (the second emission amount) of the carbon dioxide gas for the base system is calculated by multiplying the second power consumption amount calculated by the processing in S212 by the emission amount coefficient in the factory 120 obtained in this manner.

When the emission amount of the carbon dioxide gas for the base system is obtained by the processing in S215 described above, the base system emission amount calculation processing ends, and thereafter, the processing returns to the reduction contribution amount calculation processing in Fig. 6.

The above-described processing is the base system emission amount calculation processing illustrated in Fig. 7.

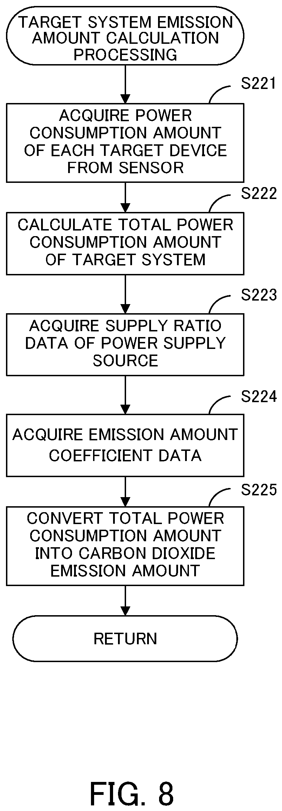

Next, details of the target system emission amount calculation processing, which is the processing in S202 in the reduction contribution amount calculation processing in Fig. 6, will be described. Fig. 8 is a flowchart illustrating processing contents of an example of the target system emission amount calculation processing.

When the processing in Fig. 8 is started, first, in S221, processing of acquiring actual measurement values of the power consumption amounts of the respective target devices 122 from the sensors 123 installed in the respective target devices 122 forming the target system 121 is performed.

Next, in S222, processing of calculating a total power consumption amount (the first power consumption amount) of the target system 121 by summing the power consumption amounts acquired from the respective sensors 123 by the processing in S221 is performed.

Next, in S223, processing of acquiring the ratio data described above, that is, the data indicating the ratio of the power supply source from the power receiving and transforming system 124 is performed, and in the subsequent S224, processing of acquiring the emission amount coefficient data 113 from the database 110 is performed. The processing in S223 and S224 is processing for providing a function as the acquisition unit 202.

Next, in S225, processing of converting the first power consumption amount calculated by the processing in S222 into the carbon dioxide emission amount is performed using the ratio data and the emission amount coefficient data 113 acquired by the processing in S222 and the processing in S223. This processing is processing for providing a function as the first conversion unit 201.

In the processing in S225, first, for each power supply source indicated in the emission amount coefficient data 113, the emission amount coefficient for the supply source is multiplied by the ratio of the power supply source indicated by the ratio data. Then, the emission amount coefficient in the factory 120, that is, the carbon dioxide emission amount per unit power consumption amount is calculated by summing the values obtained for the respective power supply sources. The emission amount of the carbon dioxide gas (the first emission amount) for the target system 121 is calculated by multiplying the first power consumption amount calculated by the processing in S222 by the emission amount coefficient in the factory 120 obtained in this manner.

When the emission amount of the carbon dioxide gas for the target system 121 is obtained by the processing in S225 described above, the target system emission amount calculation processing ends, and thereafter, the processing returns to the reduction contribution amount calculation processing in Fig. 6.

The above-described processing is the target system emission amount calculation processing illustrated in Fig. 8.

By performing each processing described above by the information processing device 100, it is possible to provide the reduction contribution amount in reduction of the emission amount of the carbon dioxide gas by replacement of the base system with the target system 121 in the drive system including the drive device as the production system of the article.

Although the embodiment of the disclosure and advantages thereof have been described in detail above, those skilled in the art will be able to make various changes, additions, and omissions without departing from the scope of the present invention clearly described in the claims.

For example, a target value of the reduction contribution amount may be set in advance and may be stored in a storage area of the information processing device 100. In this case, it is determined whether the reduction contribution amount calculated by the processing in S203 in the reduction contribution amount calculation processing illustrated in Fig. 6 satisfies the target value, and in a case in which it is determined that the reduction contribution amount does not satisfy the target value, a notification to that effect may be output by the output device 304. In addition, in a case in which it is determined that the reduction contribution amount does not satisfy the target value, in the processing in S206, information indicating that the reduction contribution amount does not satisfy the target value may be transmitted together with the calculated reduction contribution amount or instead of the calculated reduction contribution amount.

Furthermore, for example, an appropriate range for the power consumption amount of the target device 122 may be set in advance and may be stored in the storage area of the information processing device 100. In this case, it is determined whether the actual measurement value of the power consumption amount of the target device 122, acquired from the sensor 123 in the processing of S221 in the processing illustrated in Fig. 8, satisfies the appropriate range, and when it is determined that the actual measurement value does not satisfy the appropriate range, a notification to that effect may be output by the output device 304.

In addition, for example, the second power consumption amount calculated by the processing in S212 in the processing illustrated in Fig. 7 and the first power consumption amount calculated by the processing in S222 in the processing illustrated in Fig. 8 may be calculated as the power consumption amount per unit production amount of the article. That is, for example, in the processing in S212, a value obtained by dividing a total value of power consumption amounts of the respective base devices by a production amount of an article produced by the base system consuming the power of the total value is set as a calculation result of the second power consumption amount. In the processing in S222, a value obtained by dividing a total value of power consumption amounts acquired from the respective sensors 123 by a production amount of an article produced by the target system 121 consuming the power of the total value is set as a calculation result of the first power consumption amount. In this manner, the reduction contribution amount calculated by the processing in S203 in the processing illustrated in Fig. 6 is a reduction contribution amount per production number of articles. The unit of the production amount of the article may be, for example, a lot unit.

As another embodiment of the drive system, there is an article conveyance system. As illustrated in Fig. 1, the information processing device 100 is connected to the database 110. The information processing device 100 calculates a reduction contribution amount in the reduction of an emission amount of carbon dioxide gas by the update of the drive system including the drive device as the article conveyance system in the factory or the warehouse, and provides the calculated reduction contribution amount to the provision destination 130.

Furthermore, in the above-described embodiment, the information processing system 200 has been described as a drive system related to production of an article, but the information processing system 200 can be applied as an article conveyance system. In the article conveyance system, "production of an article" can be replaced with "conveyance of an article", and "production management system (PMS)" can be replaced with "point of distribution system (PDS)", "warehousing management system (WMS)", and the like.

In the above-described embodiment, an example of calculating the reduction contribution amount per production number of articles and the reduction contribution amount in units of lots has been described. Here, in a case in which the information processing system 200 is applied as a drive system related to conveyance, a reduction contribution amount required to convey a specific number of articles or a reduction contribution amount required to convey one article may be obtained. In addition, as an example of a business form, in automation of a business (picking: picking work) of selecting, taking out, and moving an article in a yard or a warehouse of a factory to a predetermined place, a reduction contribution amount in reduction of an emission amount of carbon dioxide gas by the update of a drive system including a drive device as an article conveyance system is calculated. At this time, the drive device includes an inverter, a conveyor, a conveyance robot, an automated guided vehicle (AGV), and the like.

The present application is based on Japanese Patent Application No. 2024-033553 filed on March 6, 2024. All the contents are included herein.

### Reference Signs List

- 100: INFORMATION PROCESSING DEVICE
- 101: TARGET SYSTEM EMISSION AMOUNT CALCULATION FUNCTION
- 102: BASE SYSTEM EMISSION AMOUNT CALCULATION FUNCTION
- 103: REDUCTION CONTRIBUTION AMOUNT CALCULATION FUNCTION
- 104: AUTHENTICATION FUNCTION
- 105: PROVISION FUNCTION
- 110: DATABASE
- 111: BASE DEVICE DATA
- 112: BASE DEVICE CONTROL DATA
- 113: EMISSION AMOUNT COEFFICIENT DATA
- 120: FACTORY
- 121: TARGET SYSTEM
- 122: TARGET DEVICE
- 123: SENSOR
- 124: POWER RECEIVING AND TRANSFORMING SYSTEM
- 125: PRODUCTION MANAGEMENT SYSTEM
- 130: PROVISION DESTINATION
- 200: INFORMATION PROCESSING SYSTEM
- 201: FIRST CONVERSION UNIT
- 202: ACQUISITION UNIT
- 203: SECOND CONVERSION UNIT
- 204: CALCULATION UNIT
- 205: PROVISION UNIT
- 206: AUTHENTICATION UNIT
- 210: EXTERNAL SYSTEM
- 301: CPU
- 302: MEMORY
- 303: INPUT DEVICE
- 304: OUTPUT DEVICE
- 305: AUXILIARY STORAGE DEVICE
- 306: TARGET DEVICE I/F
- 307: COMMUNICATION I/F
- 308: INTERNAL BUS

## Claims

1. An information processing system configured to provide a reduction contribution amount in reduction of an emission amount of carbon dioxide gas by replacement of a base system with a target system in a drive system including a drive device, the information processing system comprising:
a sensor configured to actually measure a first power consumption amount, which is a power amount consumed by the drive device in the target system;
a first conversion unit configured to convert the first power consumption amount actually measured by the sensor to acquire a first emission amount, which is an emission amount of the carbon dioxide gas emitted in power generation of a power amount corresponding to the first power consumption amount;
an acquisition unit configured to acquire a second power consumption amount, which is a power amount to be consumed in accordance with a control pattern of the base system, by using a power consumption model that derives power consumption based on a control pattern of the drive device;
a second conversion unit configured to convert the second power consumption amount to acquire a second emission amount, which is an emission amount of the carbon dioxide gas to be emitted in power generation of a power amount corresponding to the second power consumption amount; and
a calculation unit configured to calculate a difference between the first emission amount and the second emission amount as the reduction contribution amount.

2. The information processing system according to claim 1, wherein
the acquisition unit is further configured to acquire, from an external system,
ratio data indicating a ratio of supply power for each supply source to power supplied from a plurality of the supply sources to an installation place of the target system, and
emission amount coefficient data indicating, for each supply source, an emission amount of the carbon dioxide gas emitted in power generation of a unit power amount by the plurality of supply sources,
the first conversion unit is configured to convert the first power consumption amount into the first emission amount using the ratio data and the emission amount coefficient data, and
the second conversion unit is configured to convert the second power consumption amount into the second emission amount using the ratio data and the emission amount coefficient data.

3. The information processing system according to claim 1, wherein
the power consumption model is formed of a database having power consumption data and device control data registered therein, the power consumption data indicating, for each control content with respect to each of the plurality of drive devices, power consumption of each of the plurality of drive devices used in the base system, the device control data indicating control contents performed on each of the plurality of drive devices by operating the base system, and
the acquisition unit is configured to acquire the power consumption data and the device control data from the database, and to calculate the second power consumption amount using the power consumption data and the device control data.

4. The information processing system according to claim 1, wherein
the first conversion unit is configured to acquire the first emission amount by converting a power consumption amount per unit production amount of an article produced using the drive system, the power consumption amount being calculated from the first power consumption amount by operating the target system,
the second conversion unit is configured to acquire the second emission amount by converting a power consumption amount per the unit production amount of the article, the power consumption amount being calculated from the second power consumption amount by operating the base system, and
the calculation unit is configured to calculate the difference between the first emission amount and the second emission amount as a reduction contribution amount per the unit production amount of the article.

5. An information processing method of providing a reduction contribution amount in reduction of an emission amount of carbon dioxide gas by replacement of a base system with a target system in a drive system including a drive device, the information processing method comprising:
converting, by an information processing device, a first power consumption amount actually measured by a sensor configured to actually measure the first power consumption amount, which is a power amount consumed by the drive device in the target system, to acquire a first emission amount, which is an emission amount of the carbon dioxide gas emitted in power generation of a power amount corresponding to the first power consumption amount;
acquiring, by the information processing device, a second power consumption amount, which is a power amount to be consumed in accordance with a control pattern of the base system, by using a power consumption model that derives power consumption based on a control pattern of the drive device;
converting, by the information processing device, the second power consumption amount to acquire a second emission amount, which is an emission amount of the carbon dioxide gas to be emitted in power generation of a power amount corresponding to the second power consumption amount; and
calculating, by the information processing device, a difference between the first emission amount and the second emission amount as the reduction contribution amount.
